# EUROPEAN PATENT APPLICATION

(11) **EP 4 458 998 A1**
(43) Date of publication of application: **06.11.2024**
(21) Application number: 22915592.4
(22) Date of filing: 24.11.2022
(51) Int. Cl.: C22C 1/08, B22F 1/00, B22F 1/052, B22F 3/035, B22F 3/11

(54) **TITANIUM POROUS BODY AND TITANIUM POROUS BODY MANUFACTURING METHOD**

(30) Priority: 27.12.2021 JP 2021213306
(71) Applicant: Toho Titanium CO., LTD., Chigasaki-shi Kanagawa 253-8510 (JP)
(72) Inventor: INOUE,Yosuke, Chigasaki-shi, Kanagawa 253-8510 (JP)
(74) Representative: Mewburn Ellis LLP
(86) International application number: PCT/JP2022/043408
(87) International publication number: WO 2023/127361

(57) **Abstract**

The titanium porous body according to the present invention is in a form of a sheet, and has a thickness of 0.3 mm or less and a compressive strain amount of 0.20 or less upon pressurization at 80 MPa, wherein a half width of a first peak that is the highest peak height in a pore size distribution showing a relationship between a diameter and a volume of pores is less than or equal to 3.5 um, and a peak height of a second peak that is the second highest peak height after the first peak is less than or equal to 10% of the peak height of the first peak.

## Description

### [Technical Field]

The present invention relates to a titanium porous body in a form of a sheet, and a method for producing the titanium porous body.

### [Background Art]

Titanium porous bodies can be produced by heating and sintering titanium powder, for example, as described in Patent Literatures 1-3.

Patent Literature 1 discloses:
"A porous conductive plate which is used as a power feeder in a polymer electrolyte-type water electrolytic tank or as a current collector in a solid polymer-type fuel cell, and is comprised of a sintered body of spherical gas-atomized titanium powder".

Patent Literature 2 discloses:
"A current collector for dye-sensitized solar cells, the current collector comprising a porous sintered metal thin film having a thickness of 5 um to 60 um, a porosity of 1% to 80%, and a large number of through holes isotropically communicated with each other, wherein, when the porous sintered metal thin film is folded while gradually changing a diameter of a mandrel to a smaller diameter in a cylindrical mandrel test, no crack is generated on an outer surface of the folded portion up to a diameter of 6 mm."

Patent Literature 3 discloses:
"A method for producing a metal sintered body by sintering a sheet-shaped molded body made of metal powder by selfheating based on electrical conduction while running the sheet-shaped molded body, the method comprising: providing a reflective plate facing a surface of a heating portion of the sheet-shaped molded body due to the electrical conduction along the running direction of the sheet-shaped molded body, and cooling a center portion in a width direction of the reflective plate."

### [Citation List]

### [Patent Literature]

[PTL 1]
   Japanese Patent Application Publication No. 2002-275676 A
[PTL 2]
   Japanese Patent Application Publication No. 2014-239023 A
[PTL3]
   Japanese Patent Application Publication No. 2011-202202 A

### [Summary of Invention]

### [Technical Problem]

By the way, a titanium porous body obtained by sintering titanium powder has air and liquid permeability due to its numerous pores, and electrical conductivity, as well as high corrosion resistance due to formation of a passive film on its surface. Therefore, the use of the titanium porous body as a PTL (porous transport layer) in an environment where corrosion may occur in a PEM water electrolytic device is under consideration.

In such an application, the titanium porous body may further be required to have excellent compression resistance and uniform pore size. In particular, with regard to the compression resistance, the titanium porous body must be able to resist the compressive force that may be exerted when it is incorporated into a device such as a PEM water electrolytic device, so that the required thickness and shape are maintained. Further, if the pore size of the titanium porous body is not uniform, water and oxygen may locally flow in the relatively large pore regions, resulting in a decrease in water electrolysis efficiency. In addition, from the viewpoint of miniaturization of the device, thinner sheet-shaped titanium porous bodies are required.

An object of the present invention is to provide a titanium porous body that is relatively thin sheet-shaped, has excellent compression resistance, and has pore sizes which are uniform to some extent, and to provide a method for producing the same.

### [Solution to Problem]

As a result of intensive studies, the present inventors have found that a sheet-shaped titanium porous body having excellent compression resistance and uniform pores can be obtained by depositing a thin layer of titanium powder having a predetermined particle size on a molding surface of a mold in a dry process, and then heating it at a high temperature for sintering. However, if titanium powder having a given particle size is heated as it is at a high temperature, waviness and cracking are likely to occur after sintering due to its thin thickness, so that titanium porous body cannot be produced. The present inventors have attempted to suppress the occurrence of waviness and cracking by adjusting a forming manner of a mold release layer on the molding surface and cooling conditions after heating. As a result, it has become possible to produce the titanium porous body as described above.

The titanium porous body according to the present invention is in a form of a sheet, and has a thickness of 0.3 mm or less and a compressive strain amount of 0.20 or less upon pressurization at 80 MPa, wherein a half width of a first peak that is the highest peak height in a pore size distribution showing a relationship between a diameter and a volume of pores is less than or equal to 3.5 um, and a peak height of a second peak that is the second highest peak height after the first peak is less than or equal to 10% of the peak height of the first peak.

The above titanium porous body preferably has a pore diameter of less than or equal to 10.0 um at a position where the first peak appears in the pore size distribution.

The above titanium porous body preferably has a porosity of less than or equal to 45%.

The above titanium porous body may have an area of more than or equal to 10000 mm².

The above titanium porous body preferably has a Ti content of more than or equal to 98% by mass.

In the above titanium porous body, the peak height of the second peak is preferably less than or equal to 50 of the peak height of the first peak.

The method for producing a titanium porous body is a method for producing a titanium porous body in a form of a sheet by heating and sintering titanium powder on a molding surface of a mold, the method comprising: a powder preparation step of preparing titanium powder having a 10% particle diameter D10 of 5 um or more and 15 um or less and a 90% particle diameter D90 of 15 um or more and 25 um or less; a mold release layer formation step of forming no mold release layer on an adhesive region of an outer edge portion of the molding surface but forming the mold release layer on an easily releasable region other than the adhesive region; after the mold release layer formation step, a powder deposition step of depositing the titanium powder on the molding surface in a dry process; after the powder deposition step, a heating step of heating the titanium powder to a maximum reaching temperature of more than or equal to 950°C and sintering the titanium powder to obtain a sintered body; and after the heating step, a cooling step of cooling the sintered body on the molding surface, wherein a time required for cooling at least from 950°C to 800°C is less than or equal to 1500 seconds; and wherein the method produces a titanium porous body having a thickness of less than or equal to 0.3 mm.

The above method can produce the titanium porous body having an area of more than or equal to 10000 mm².

In the above method, the titanium powder prepared in the above powder preparation step preferably has an average circularity of less than or equal to 0.83.

In the above method, a material of the mold having the molding surface preferably comprises at least one selected from the group consisting of carbon, quartz, graphite, magnesia (MgO), calcia (CaO), zirconia (ZrO₂) and yttria (Y₂O₃).

In the above method, it is preferred that a time for bringing the titanium powder to more than or equal to 950°C in the above heating step be from 30 to 480 minutes.

### [Advantageous Effects of Invention]

The titanium porous body according to the present invention is relatively thin sheet-shaped, and has excellent compression resistance and pore sizes that are uniform to some extent. The method for producing a titanium porous body according to the present invention is also suitable for producing such a titanium porous body.

### [Brief Description of Drawings]

[FIG. 1]

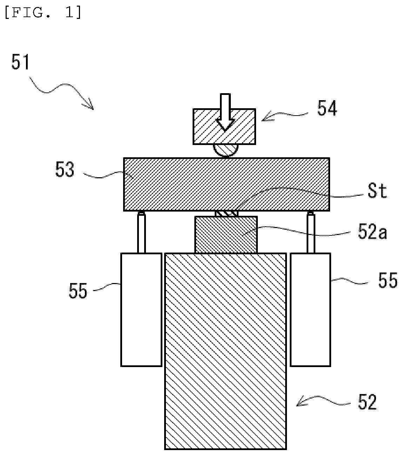

   FIG. 1 is a schematic cross-sectional view showing a main configuration of a compression device that can be used to measure an amount of compressive strain in a titanium porous body.
[FIG. 2]

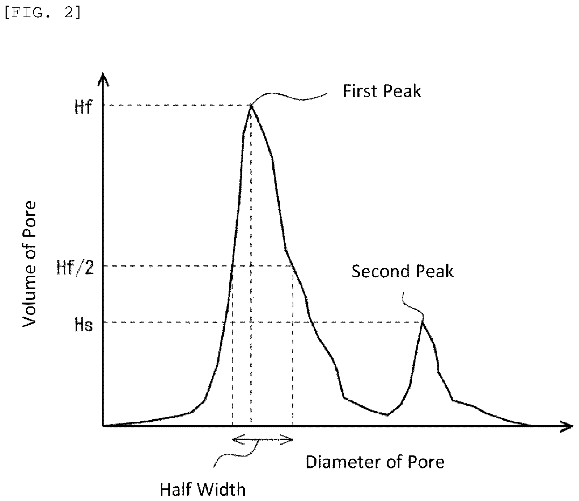

   FIG. 2 is a graph showing an example of a pore size distribution of a titanium porous body.
[FIG. 3]

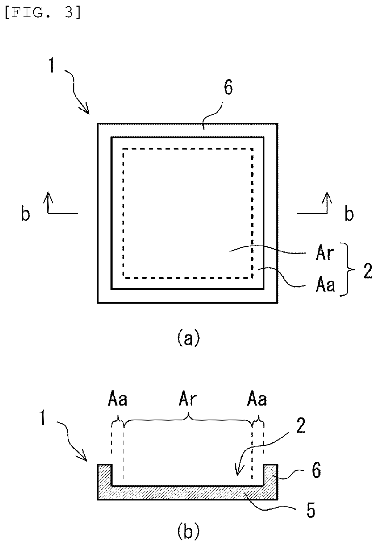

   FIG. 3(a) is a plane view showing an example of a mold that can be used in a method for producing a titanium porous body according to an embodiment of the present invention, and FIG. 3(b) is a cross-sectional view taken along the line b-b of FIG. 3(a).
[FIG. 4]

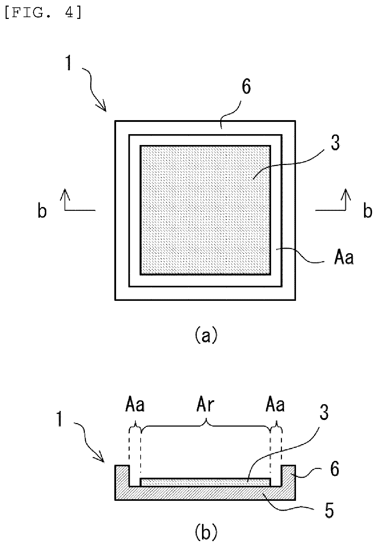

   FIG. 4(a) is a plane view showing the mold of FIG. 3 with a mold release layer formed on an easily releasable region of the molding surface, and FIG. 4(b) is a cross-sectional view taken along the line b-b of FIG. 4(a).
[FIG. 5]

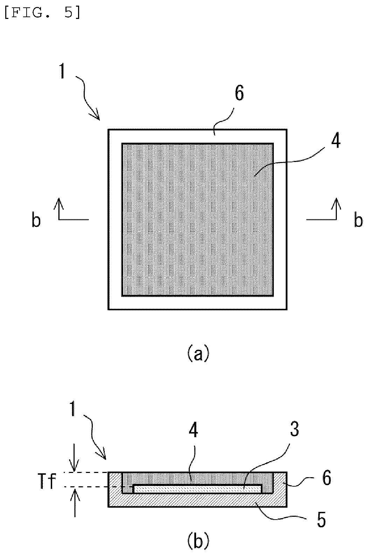

   FIG. 5(a) is a plane view showing the mold and mold release layer of FIG. 4 together with titanium powder deposited on the molding surface, and FIG. 5(b) is a cross-sectional view taken along the line b-b of FIG. 5(a).
[FIG. 6]

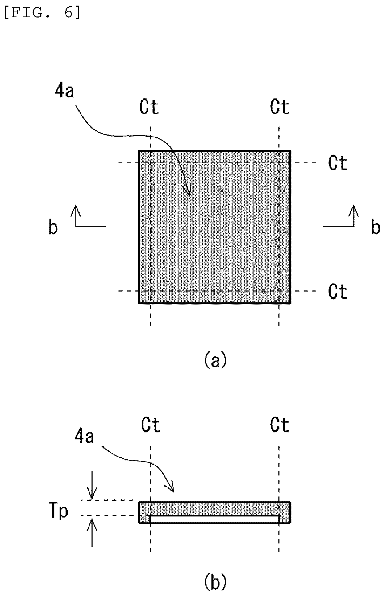

   FIG. 6(a) is a plane view showing the titanium porous body produced according to FIGS. 3 to 5, and FIG. 6(b) is a cross-sectional view taken along the line b-b of FIG. 6(a).
[FIG. 7]

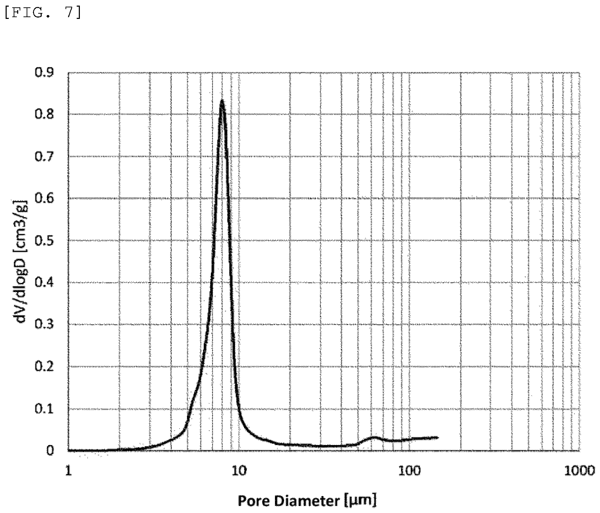

   FIG. 7 is a graph showing a pore size distribution of a titanium porous body according to Example 1.
[FIG. 8]
   FIG, 8 is a graph showing a pore size distribution of a titanium porous body according to Comparative Example 3.

### [Description of Embodiments]

Embodiments of the present invention will be described in detail below.

The titanium porous body according to an embodiment of the present invention is in a form of a sheet, and has a thickness of 0.3 mm or less and a compressive strain amount of less than or equal to 0.20 upon pressurization at 80 MPa, wherein a half width of a first peak that is the highest peak height in a pore size distribution showing a relationship between a diameter and a volume of pores is less than or equal to 3.5 um, and a peak height of a second peak that is the second highest peak height after the first peak is less than or equal to 10% of the peak height of the first peak.

The method for producing the titanium porous body includes a powder preparation step, a mold release layer formation step, a powder deposition step, a heating step, and a cooling step. The powder preparation step involves preparing titanium powder having a 10% particle diameter D10 of 5 um or more and 15 um or less and a 90% particle diameter D90 of 15 um or more and 25 um or less. The heating steps involves heating the titanium powder to a maximum reaching temperature of more than or equal to 950°C to obtain a sintered body. As a result, the final titanium porous body produced will have excellent compression resistance and relatively uniform pore size.

However, under the above conditions of the particle size of the titanium powder and the heating temperature, the sintered body adheres firmly to the molding surface to make it difficult to peel off if the mold release layer is not formed on the molding surface, and cracking will occur if the sintered body is forcibly pulled off. On the other hand, if the mold release layer is formed over the entire molding surface, the titanium powder deposited on the layer tends to slide easily, causing irregular shrinkage and waviness of the sintered body. To suppress the waviness, in this embodiment, the mold release layer is not formed on the adhesive region of the outer edge portion of the molding surface, but it is formed on the easily releasable region other than the adhesive region, in the mold release layer formation step. By doing so, in the heating step, the titanium powder is sintered while adhering to the adhesive region at the point where the titanium powder is located on the adhesive region. As a result, irregular shrinkage of the titanium powder during heating is suppressed and the form of the sintered body becomes flat without waviness.

Furthermore, in this embodiment, the sintered body is cooled on the molding surface, and at least the time required for cooling from 950°C to 800°C is less than or equal to 1500 seconds, in the cooling step. By rapidly cooling the sintered body in such a predetermined high temperature range for at least the defined time, a position adhered to the adhesive region of the sintered body then tends to spontaneously peel off due to thermal shock, and the sintered body is easily removed from the mold after cooling. In the high temperature range described above, the sintered body would not crack under the action of thermal shock because of its greater toughness due to the higher temperature. As a result, it is possible to produce a titanium porous body that is in a form of a relatively thin sheet, and has excellent compression resistance and somewhat uniform pore size. If the sintered body is not rapidly cooled after heating, it is assumed that the tensile stress generated by gradually cooling the sintered body while maintaining thermal contraction during heating, and the tensile stress is released at once when the sintered body is pulled off from the molding surface after cooling, so that cracking occurs due to the impact at that time.

### (Composition)

The titanium porous body is made of titanium. If it is made of titanium, a titanium porous body having high electrical conductivity can be obtained with a certain relative density. The Ti content of the titanium porous body is, for example, 98% by mass or more, preferably 99% by mass or more. A higher Ti content is desirable, but it may be 99.8% by mass or less.

The titanium porous body may contain Fe as an impurity, with an Fe content of 0.25% by mass or less, for example. The titanium porous body may also contain Ni, Cr, Al, Cu, Zn, and Sn as unavoidable impurities resulting from the production process, for example. It is suitable that the content of each of Ni, Cr, Al, Cu, Zn, and Sn is less than 0.10% by mass, and the total content is preferably less than 0.30% by mass.

The titanium porous body may, for example, have an oxygen content of 0.15 to 0.50% by mass, a nitrogen content of 0.02 to 0.20% by mass, and a carbon content of 0.02 to 0.20% by mass. The oxygen content can be determined by an inert gas fusion-infrared absorption method, the nitrogen content by an inert gas fusion-thermal conductivity method, and the carbon content by a combustion infrared absorption method, respectively.

The titanium porous body may have a purity corresponding to pure titanium types 1-4 in JIS H 4600 (2012), typically type 1 or 2, except for the oxygen content as described above.

### (Thickness)

The titanium porous body in the form of the sheet has a thickness of 0.3 mm or less, preferably 0.2 mm to 0.3 mm. A somewhat thicker thickness can lead to suppression of non-uniform diffusion of oxygen and water in a PEM water electrolysis device application, thereby preventing a decrease in an electrolysis efficiency. The term "form of a sheet" for the titanium porous body means a plate shape or a foil shape having a smaller thickness than planar view dimensions, and there is no particular limitation on the shape in the planar view.

The thickness is measured at five points: four at the periphery and one at the center of the titanium porous body, using a digital thickness gage having a flat measuring element of 10 mm in diameter and a measurement accuracy of 0.001 to 0.01 mm, such as Mitutoyo's digital thickness gage (Model No. 547-321), for example. An average of these measurements is used as an average value. If the titanium porous body in the form of the sheet is rectangular in planar view, the above four points of the periphery should be the four points of the four corners.

### (Compressive Strain Amount)

The titanium porous body has an amount of compressive strain of less than or equal to 0.20 when it is subjected to an applied pressure of 80 MPa. When the amount of compressive strain is smaller, the titanium porous body can be evaluated as having excellent compression resistance, and the required thickness and shape can be maintained inside a device such as a PEM water electrolysis device. The amount of compressive strain as described above is preferably less than or equal to 0.18, for example, it may be 0.13 to 0.18.

The amount of compressive strain of the titanium porous body can be measured using a compression device 51 as shown in FIG 1. The compression device 51 includes: a lower jig 52 having a mounting table 52a on which a sample St of a titanium porous body is placed; an upper jig 53 disposed on an upper side of the lower jig 52 and facing the mounting table 52a; a pressurizing mechanism 54 located on an upper side of the upper jig 53 and contacting the upper jig 53 at one point to pressurize the upper jig 53 from behind; and two displacement meters 55 fixedly arranged around the lower jig 52, for measuring the displacement of the upper jig 53 with respect to the lower jig 52.

To determine the amount of compressive strain of the titanium porous body using the compression device 51, a square shaped sample St having a 20 mm square in the planar view is cut out from the titanium porous body. The sample St is then placed on the mounting table 52a between the upper jig 53 and the mounting table 52a of the compression device 51. Subsequently, at room temperature, the pressurizing mechanism 54 is activated as indicated by the arrow in FIG. 1 to displace the upper jig 53 so as to be closer to the lower jig 52, and the sample St is clamped and compressed between the upper jig 53 and the mounting table 52a. At this time, a displacement speed of the upper jig 53 can be constant at 0.1 mm/min. A thickness Tb of the sample St at the time of the compression is determined from the displacement measured by the displacement meter 55 when an applied pressure of 80 MPa is applied to the sample St. Also, a displacement amount T0 of the displacement meter 55 when the applied pressure of 80 MPa acts on the sample St without the sample St placed in the compression device 51 is also determined. The amount of compressive strain Dc of the titanium porous body upon the pressurizing at 80 MPa can be calculated from the thickness Tb of the sample St at the time of the pressuring as described above, the thickness Ta of the sample St in the state of no pressure before the pressuring, and the displacement amount T0 in the state where the sample St is not placed in the compression device 51, using the equation: Dc = (Ta - Tb - T0) / Ta.

### (Pore Size Distribution)

The titanium porous body has a large number of pores formed. The pore size distribution, which indicates the relationship between the diameter and volume of each pore, can be measured by the mercury intrusion method. The mercury intrusion method can be performed using a Micromeritec Autopore IV 9500. In this case, the measurement can be performed on a 0.35 to 0.50 g of titanium porous body sample at a mercury intrusion pressure of 14 to 227 MPa, using a measurement mode of pressure increasing process, at a measurement cell volume of 3.9 cm³, a mercury contact angle of 141.3°, and a mercury surface tension of 484 dyn/cm. The measurement results can be represented by a graph with a pore diameter on a horizontal axis and a pore volume on a vertical axis, as illustrated in FIG. 2.

At least one peak appears in the pore size distribution of titanium porous body. If there are multiple peaks in the pore size distribution, a peak having the highest peak height among them is referred to as the first peak. Alternatively, if there is only one peak in the pore size distribution, that peak is referred to as the first peak.

In the titanium porous body according to this embodiment, the half width of the first peak is less than or equal to 3.5 um. The half width of the first peak means a width at half of a peak height Hf (Hf/2) for the mountain of the first peak, as shown in FIG. 2. It is recognized that if the half width of the first peak is small, the pore size distribution is sharp and the pore size is uniform. If such a titanium porous body is used as PTL in a PEM water electrolysis device, water and oxygen will flow uniformly throughout the titanium porous body, which is expected to result in high water electrolysis efficiency. From this viewpoint, the half width of the first peak is preferably less than or equal to 3.0 um, or even less than or equal to 2.5 um. A smaller half width of the first peak is preferable, but the half width may be, for example, more than or equal to 1.5 um.

The diameter of the pore at the position where the first peak appears in the pore size distribution is preferably less than or equal to 10.0 um, and more preferably less than or equal to 9.0 um. As described above, the first peak has a small half width, and furthermore, the first peak appears at a relatively small diameter, resulting in the pores sharply distributed on the small diameter side. This means that there are few large holes and many fine holes, which will facilitate uniform diffusion of a fluid and will suppress deformation during compression. On the other hand, it is preferable that the diameter of each pore at the position where the first peak appears is more than or equal to 3.0 um. The diameter of each pore at the position where the first peak appears can be large to some extent to ensure good fluid distribution.

It is preferable that the pore size distribution has only the first peak, without any peak other than the first peak. This is because this means that the titanium porous body having such a pore size distribution has a relatively uniform pore size. On the other hand, peaks other than the first peak may appear in the pore size distribution. The peak having the second highest peak height after the first peak is referred to as a second peak. In the pore size distribution, a peak height Hs of the second peak that is the second highest peak height after the first peak is preferably less than or equal to 10%, even less than or equal to 5%, of the peak height Hf of the first peak.

### (Porosity)

The porosity of the titanium porous body is preferably less than or equal to 45%. The porosity of this magnitude can achieve the required air permeability or liquid permeability depending on the application. A porosity ε of the titanium porous body is calculated using an apparent density ρ' calculated from a volume calculated from the width, length and thickness of the titanium porous body, and the mass, and a true density ρ (4.51 g/cm³) of the titanium that makes up the titanium porous body, by the equation: ε = (1 - ρ' / ρ) × 100. The porosity of the titanium porous body may be more than or equal to 30%.

### (Area)

The area of the surface of the titanium porous body in the form of the sheet in planar view may be more than or equal to 10000 mm², even more than or equal to 40000 mm², depending on the application. The area of the titanium porous body is, for example, from 40,000 mm² to 600,000 mm². When attempting to produce such a large titanium porous body in the form of the sheet, it has conventionally been difficult to produce it because waviness and cracks are generated. In contrast, in this embodiment, the production method as described below can be used, thereby suppressing the generation of waviness and cracks, and producing even large titanium porous bodies.

### (Production Method)

Embodiments of the method for producing a titanium porous body include: a powder preparation step of preparing titanium powder having a predetermined particle size; a mold release layer formation step of forming a mold release layer in a predetermined region on a molding surface of a mold; after the mold release layer formation step, a powder deposition step of depositing the titanium powder on the molding surface in a dry process; a heating step of heating the titanium powder deposited on the molding surface; and after the heating step, a cooling step of cooling the sintered body on the molding surface, wherein the time required for cooling from 950°C to 800°C is 1500 seconds or less.

In the powder preparation step, titanium powder having a relatively high purity and a predetermined particle size is prepared so that a titanium porous body having the composition as described above is finally produced. As the predetermined particle size, the titanium powder has a 10% particle diameter D10 of 5 um or more and 15 um or less, and a 90% particle diameter D90 of 15 um or more and 25 um or less. If the titanium powder does not fulfill these particle size requirements, any titanium porous body having high compression resistance and uniform pore size cannot be obtained. From this viewpoint, the 10% particle diameter D10 of the titanium powder is preferably 7 um or more and 12 um or less. From the same viewpoint, the 90% particle diameter D90 is preferably 17 um or more and 23 um or less.

The above 10% particle diameter D10 or the 90% particle diameter D90 means the particle diameter in which a cumulative distribution on a volume basis is 10% or 90% in the particle size distribution obtained by a laser diffraction scattering method, respectively.

As long as the titanium powder fulfills the above particle size requirements, there are no particular requirements for its shape, form, or production method. When pulverized powder such as hydride-dehydride titanium powder (so-called HDH powder) is used as the titanium powder, it is preferable because the contact points between the particles forming the pulverized powder are increased, and the compression resistance is further enhanced. It should be noted that the hydride-dehydride titanium powder is obtained by hydrogenating and pulverizing sponge titanium or the like, and then dehydrogenating the resulting pulverized powder. Titanium hydride powder that has not been dehydrogenated after the above pulverization can also be used. The hydrogen content of the titanium hydride powder is preferably less than or equal to 5% by mass.

An average circularity of the powder is preferably 0.83 or less in terms of an increase in contact point. The above pulverized powder tends to have a relatively small average circularity. The average circularity is determined as follows. Using an electron microscope, a perimeter (A) of a projected area of the particles of the titanium powder is measured, and a ratio of a perimeter (B) of a circle having an area equal to the projected area to the perimeter (A) is defined as a circularity (B/A). An average circularity is obtained by allowing particles to flow together with a carrier liquid in a cell, capturing images of a large number of particles with a CCD camera, calculating the above circularity (B/A) for each particle from 1000 to 1500 individual particle images, and determining an average value of the circularities of the particles. The circularity value increases as the shape of the particle approaches a true sphere, and the circularity of a particle having a perfectly spherical shape is 1.00. Conversely, the circularity value decreases as the shape of the particles departs from a true sphere.

When the titanium powder that is pulverized as described above or the titanium powder having a relatively small average circularity is used to produce a titanium porous body, the skeleton of the three-dimensional network structure that defines the voids of the titanium porous body tends to be sponge titanium-shaped. The shape of the sponge titanium-shaped structure is similar to that of the sponge titanium produced by the Kroll process. When titanium powder that is the pulverized powder or the titanium powder having the small average circularity is used, a titanium porous body having such a sponge titanium-shaped skeleton and a sheet-shaped outer shape can be obtained. On the other hand, when titanium fibers are used, the skeleton of the three-dimensional network structure that defines the voids of the titanium porous body is often in a nonwoven shape. Further, in the method of using a paste containing titanium powder and organic binder, etc., drying the paste and then sintering the titanium powder after drying the paste, rather than a method of depositing the titanium powder on the molding surface as described below, if the paste contains a foaming agent, the titanium porous body produced by the former method is susceptible to the formation of voids even within the skeleton due to the effect of the foaming agent.

Although the above titanium powder is deposited on the molding surface of the mold, prior to the deposition, the mold release layer formation step is carried out. In the mold release layer formation step, a mold release layer is formed in a predetermined region of the molding surface of the mold. By forming the mold release layer, the adhesion of the titanium powder to the mold during sintering is well suppressed, and even if the thinly deposited titanium powder is sintered at a relatively high temperature, the titanium porous body can be easily removed from the molding surface of the mold after sintering.

Here, if the releasing layer is formed on the entire molding surface, it is considered that the titanium powder irregularly shrinks while sliding on the mold release layer due to heating when the titanium powder is sintered, and based on such a cause or the like, the sheet-shaped metal body, which is a sintered body of the titanium powder, will form an undulating shape or a wavy shape to have waviness.

In order to suppress the generation of such waviness, in this embodiment, as illustrated in FIG. 3, the molding surface 2 is divided into an adhesive region Aa located on an outer edge portion of the molding surface 2; and an easily releasable region Ar where it is a region other than the adhesive region Aa. Then, as illustrated in FIG. 4, the mold release layer 3 is not formed on the adhesive region Aa, and the mold release layer 3 is formed on the easily releasable region Ar, and the titanium powder 4 adheres to the adhesive region Aa without the mold release layer 3 in the heating step (see FIG. 5), as described below.

According to this, in the heating step, the heating causes the adhesive region Aa where the mold release layer 3 is not present and the titanium powder 4 deposited thereon react with and adhere to each other. Thus, it is believed that the titanium powder 4 being sintered is fixed in the adhesive region Aa on the outer edge portion, thereby suppressing random thermal shrinkage of the titanium powder 4 on the mold release layer 3. Consequently, the generation of waviness and cracks in the sintered body 4a can be satisfactorily suppressed. It should be noted that the easily releasable region Ar refers to a region where the sintered body 4a is easily released after sintering due to the presence of the mold release layer 3 on the surface, as compared to the adhesive region Aa where the mold release layer 3 is not present.

From the viewpoint of more reliably suppressing the generation of waviness and cracks, the outer edge portion of the molding surface 2 is the adhesive region Aa where the mold release layer 3 is absent over the entire circumference of the outer edge portion, as in the illustrated embodiment. However, it is not necessary that the entire circumference of the outer edge portion of the molding surface 2 is the adhesive area Aa. If at least a part of the outer edge portion of the molding surface 2 in the circumferential direction, for example, a plurality of locations, are used as the adhesive region Aa, the fixing of the titanium powder 4 by adhering to the adhesive region Aa as described above, and hence suppression of the generation of waviness and/or cracks in the sintered body 4a, can be achieved. For the molding surface 2 having a rectangle such as a square as shown in the figure, it is also considered that, for example, the four corners of the molding surface 2 are used as the adhesive region Aa where no release layer 3 is present, thereby enabling waviness and/or cracks of the sintered body 4a to be suppressed.

In the mold release layer formation step, the mold release layer 3 is formed only on the easily releasable region Ar, among the adhesive region Aa and the easily releasable region Ar on the molding surface 2. However, in the powder deposition step, the titanium powder 4 is deposited not only onto the easily releasable region Ar but also onto the adhesive region Aa on the molding surface 2, as illustrated in FIG. 5. In this embodiment, as can be seen from FIG. 5(b), the mold release layer 3 on the molding surface 2 will be entirely surrounded by the titanium powder 4 deposited on the adhesive region Aa around the mold release layer 3 and the titanium powder 4 deposited on the mold release layer 3.

Therefore, a surface area of the molding surface 2 on which the titanium powder 4 is deposited in the powder deposition step (in the illustrated example, the sum of the surface areas of the adhesive region Aa and the easily releasable region Ar) will be larger than that of the easily releasable region Ar. A ratio (Ss / Sr) of a surface area Ss of the molding surface 2 on which the titanium powder 4 is deposited in the powder deposition step to a surface area Sr of the easily releasable region Ar may be determined as needed, and it may be, for example, 1.05 to 1.50, or it may be, for example, 1.10 to 1.35. By providing a higher surface area Ss for depositing the titanium powder 4 than the surface area Sr of the easily releasable region Ar, the effect of suppressing the waviness in the sintered body 4a can be sufficiently obtained. On the other hand, by preventing the surface area Ss for depositing the titanium powder 4 from being not too large with respect to the surface area Sr of the easily releasable region Ar, it can suppress a difficulty to remove the sintered body 4a from the molding surface 2.

It should be noted that the mold release layer 3 can be formed by applying a mold releasing agent containing, for example, boron nitride (BN) and/or titanium boride (TiB₂) to the easily releasable region Ar on the molding surface 2. Any releasing agent that is not bonded to the titanium powder 4 by sintering can optionally be used, and is not limited to those described above. Alternatively, the mold release layer 3 may be formed by coating the molding surface 2 with a liquid such as a slurry in which fine particles of boron nitride and/or titanium boride are dispersed in a solvent as a mold releasing agent. In this case, it is preferable to dry the mold release layer 3 before depositing the titanium powder 4.

The mold 1 having the molding surface 2 may be made of any material as long as it can adhere to the titanium powder 4 with an appropriate strength by sintering. The mold 1 preferably includes, for example, at least one selected from the group consisting of carbon, quartz, graphite, magnesia (MgO), calcia (CaO), zirconia (ZrO₂) and yttria (Y₂O₃) . The mold 1 is made of, for example, carbon, quartz, graphite, magnesia, calcia, zirconia, or yttria. Further, the mold 1 may be made of carbon or graphite. With the mold 1 made of such materials, the titanium powder 4 is fixed to the molding surface 2 by adhesion of the titanium powder 4 to the adhesive region Aa during sintering, so that the waviness in the sintered body 4a is well suppressed.

In the illustrated embodiment, the mold 1 has a rectangular shape such as a square in a planar view as a whole, and includes: a bottom wall 5 having the molding surface 2; and a side wall 6 standing from an outer edge portion of the bottom wall 5 to surround the molding surface 2 over the entire circumference. On the inner side of the side wall 6 and on the molding surface 2, a space is defined in which the titanium powder 4 is deposited. However, the shape or structure of the molding surface 2 may optionally be changed depending on various conditions of the titanium porous body to be produced, and is not limited to the illustrated one. The molding surface 2 may have, for example, an appropriate polygonal, elliptical, or circular shape in a planar view. Also, the mold 1 that does not have the side wall 6 may be used.

In the powder deposition step, as shown in FIG. 5, the titanium powder 4 is deposited in a dry process on the molding surface 2, more particularly, on the easily releasable region Ar where the mold release layer 3 is formed in the above area setting step, and on the adhesive region Aa where the mold release layer 3 is not formed. As used herein, the "dry process" means that a liquid such as a solvent or a binder is not used. In the powder deposition step, for example, the titanium powder 4 is deposited by dropping it in a gas such as air or in vacuum, rather than settling the titanium powder 4 in a slurry in which the titanium powder 4 is dispersed in a liquid.

At this time, in the easily releasable region Ar where the mold release layer 3 is present, the titanium powder 4 is deposited onto the mold release layer 3. On the other hand, in the adhesive region Aa where the mold release layer 3 is not present, the titanium powder 4 is brought into contact with the adhesive region Aa and the titanium powder 4 is directly deposited onto the adhesive region Aa.

In the powder deposition step, it is preferable to deposit the titanium powder 4 at least in the deposition direction without applying a pressure in order to obtain a titanium porous body having a predetermined air permeability or liquid permeability. This is because when the pressure is intentionally applied in the deposition direction, a dense titanium porous body is formed after sintering, thereby deteriorating the air permeability or liquid permeability. Here, by depositing the titanium powder 4 without pressurization, the titanium porous body finally produced results in a relatively large first peak and a sufficiently small or nearly nonexistent second peak in the pore size distribution as described above, tending to make the pore sizes uniform.

More particularly, on the molding surface 2 of the mold 1 and on the inner side of the side wall 6, the titanium powder 4 is shaken off from the upper side and covered over the surface. After depositing the titanium powder 4 on the molding surface 2 to some extent, a flat spatula or the like is moved along the top surface of the side wall 6 to remove a part of the titanium powder 4 that has risen toward the upper side than the top surface of the side wall 6 to the outside of the side wall 6. When the mold 1 that does not have the side wall is used, a member corresponding to the side wall is arranged, and a part of the titanium powder 4 that has risen toward the upper side can be then removed using a leveling tool such as a flat spatula. Thus, a part of the titanium powder that has risen toward the upper side can be removed by using the leveling tool. In this case, the titanium powder 4 is not intentionally pressed in its deposition direction. As a result, the titanium powder 4 can be deposited on the inner side of the side wall 6 of the mold 1 by the height of the side wall 6. In the heating step, the titanium powder 4 is placed in a furnace together with the mold 1 and heated to form a sheet-shaped sintered body 4a corresponding to the space on the molding surface 2 of the container-shaped mold 1. The thickness of the porous metal body in the form of the sheet can be adjusted by changing the height of the side wall 6 of the mold 1 or the like.

The thickness of the titanium powder 4 deposited on the molding surface 2 can be appropriately set depending on the thickness of the titanium porous body to be produced. A deposition thickness Tf of the titanium powder 4 deposited on the easily releasable region Ar can be appropriately set in view of a thickness Tp of the titanium porous body.

After depositing the titanium powder 4 onto the molding surface 2 in the powder deposition step, a heating step is performed to heat the titanium powder 4 at a maximum reaching temperature of more than or equal to 950°C on the molding surface 2. This provides the sintered body 4a on the molding surface 2. Here, by heating at the maximum reaching temperature of more than or equal to 950°C, it is believed that the following phenomenon will be generated. That is, the titanium powder 4 is sintered as a whole, and the titanium powder 4 that is in contact with the adhesive region Aa without the mold release layer 3 is attached to the adhesive region Aa. It is believed that the titanium powder 4 is attached and fixed to the adhesive region Aa on the outer edge portion of the molding surface 2, thereby suppressing random shrinkage of the titanium powder 4 on the mold release layer 3 in the easily releasable region Ar. As a result, the generation of waviness and cracks in the sintered body 4a formed by sintering the titanium powder 4 is suppressed.

In the heating step, the titanium powder 4 can be heated and sintered in a reduced pressure atmosphere such as vacuum or in an inert atmosphere. This can prevent the titanium powder 4 from being excessively oxynitrided during sintering. More particularly, for example, the degree of vacuum can reach 10⁻⁴ Pa to 10⁻² Pa in a vacuum furnace to carry out the sintering of the titanium powder 4 in a reduced pressure atmosphere. Alternatively, the sintering of the titanium powder 4 can be carried out in an inert atmosphere with the atmosphere being an argon gas. Here, it should be noted that the nitrogen gas does not correspond to the inert gas.

In the heating step, the maximum reaching temperature is more than or equal to 950 °C. If this is less than 950 °C, the compression resistance of the porous metal body finally produced may be deteriorated or the uniformity of the sizes of the pores may be deteriorated. The maximum reaching temperature is preferably more than or equal to 1000 °C. On the other hand, the maximum reaching temperature is preferably less than or equal to 1200 °C, and more preferably less than or equal to 1100 °C. By thus preventing the temperature from being excessively increased, it is possible to suppress relatively early decomposition of the mold 1 due to adhesion of the titanium powder 4 in the adhesive region Aa.

Further, in the heating step, the time for bringing the temperature to more than or equal to 950°C is preferably 30 minutes to 480 minutes, and further 60 minutes to 360 minutes. By preventing the time from being excessively shortened, the particles of the titanium powder 4 are sufficiently firmly bonded to each other, so that the strength of the titanium porous body can be further increased. Further, by preventing the above time from being prolonged, any densification of the titanium porous body due to excessive sintering can be suppressed, so that the titanium porous body can satisfactorily exhibit the required air permeability or liquid permeability.

In addition, when the titanium powder 4 contains titanium hydride, it is preferable to perform a dehydrogenation step prior to the heating step. The heating temperature and the heating time of the dehydrogenation step can be determined as needed in view of the content of titanium hydride powder. For example, the heating temperature may be 450°C to 700°C and the heating time may be 30 minutes to 360 minutes. The dehydrogenation step can be performed in a vacuum furnace in a reduced pressure atmosphere by allowing a degree of vacuum to reach 10⁴ Pa to 10⁻² Pa. When it is heated in the dehydrogenation step, the heating step can be performed after cooling down once, or the heating step may be performed by further increasing the temperature without cooling.

In the cooling step after the above heating step, the sintered body 4a is cooled on the molding surface 2. It is believed that after the heating step, the sintered body 4a on the molding surface 2 is adhered at the adhesive region Aa on the outer edge portion of the molding surface 2, and the tensile stress is generated due to thermal contraction during heating because the sintered body 4a has been heated while fixing its periphery during the heating step. When the sintered body 4a is cooled at a relatively slow rate during the subsequent cooling step, cracks are generated in the sintered body 4a when the sintered body 4a is pulled off from the molding surface 2. This would be because when the cooling rate is slow, the temperature of the sintered body 4a decreases while maintaining the above tensile stress, and when it is pulled off from the molding surface 2 after cooling, the tensile stress is suddenly released and its impact acts on it.

To suppress the cracks of the sintered body 4a, in the cooling step, at least the time required for cooling from 950°C to 800°C is less than or equal to 1500 seconds when cooling the sintered body 4a on the molding surface 2. In other words, the cooling rate should be fast at least while the temperature is in the predetermined high temperature range. By cooling at a relatively high rate in the predetermined high temperature range, the sintered body 4a would be subjected to thermal shock in a high-toughness state at a high temperature. As a result, the portions of the sintered body 4a that have been adhered to the adhesive region Aa naturally peel off, making it easier to remove the sintered body 4a from the mold 1 after the cooling so that cracks are not generated.

The time in the predetermined high temperature range is preferably shorter. Therefore, the time required for cooling from 950°C to 800°C should be less than or equal to 1500 seconds, preferably less than or equal to 600 seconds. It should be noted that there is no particular disadvantage if the cooling rate is too high, but there is no further advantage, and it is not practical to achieve such a high cooling rate in terms of the structure of the furnace. The time required for cooling from 950°C to 800°C may be more than or equal to 30 seconds, for example, or it may also be more than or equal to 60 seconds.

At least in the temperature range from 950°C to 800°C, the rapid cooling of the sintered body 4a in a short time as described above causes the sintered body 4a to naturally peel off from the molding surface 2, as described above, making it easier to subsequently remove the sintered body 4a from the mold 1. In the temperature range below 800°C, such a higher cooling rate will not be required.

In the cooling step, it is preferable to feed an inert gas such as argon or helium in a furnace to cool the sintered body 4a while stirring the inert gas in order to shorten the cooling time and rapidly cool it. This allows the sintered body 4a to be cooled in a short time because it is cooled not only by radiation but also by convection and conduction using the inert gas as a medium. For example, a fan can be installed in the furnace and the fan can be run during the cooling step to speed up the cooling rate, thereby stirring the inert gas.

The cooling step can be performed in the furnace used in the heating step, or it can be performed at a different facility or location such as by moving the sintered body 4a from the furnace used in the heating step together with the mold 1.

After the cooling step, the sintered body 4a of the titanium powder 4 is removed from the mold 1. For example, the sintered body 4a of titanium powder 4 may be removed after the temperature is reduced to 100°C or less. By rapidly cooling the sintered body 4a in the predetermined high temperature range, the portions of the sintered body 4a that have adhered to the adhesive region Aa then tend to spontaneously peel off due to thermal shock, making it easier to remove it from the mold 1 after cooling. It is possible to remove the sintered body 4a from the molding surface 2 so that at least the portion of the sintered body 4a positioned on the easily releasable Ar is not damaged due to the peeling-off. When the mold releasing layer 3 is formed of mold releasing agent powder, the mold release agent powder may enter the surface of the sintered body 4a that has been in contact with the mold release layer 3 to some extent, but such powder can be removed by an appropriate method such as blowing air or washing with water.

As shown in FIG. 6, for example, the sintered body 4a removed from the molding surface 2 may optionally be cut at a cutting position Ct substantially corresponding to a boundary position between the adhesive region Aa and the easily releasable region Ar, in order to remove the outer edge portion located on the adhesive region Aa. By such a way, the inner portion having a good property in the mold 1, which has been located on the mold release layer 3 of the easily releasable region Ar and has not substantially adhered to the molding surface 2, can be removed as the titanium porous body. Moreover, the thickness of the titanium porous body removed by the above cutting becomes more uniform.

### [Examples]

Next, the titanium porous body according to the present invention was experimentally produced, and its performance was evaluated as described below. However, descriptions herein are merely for illustration, and are not intended to be limited thereto.

Titanium powder having each particle size shown in Table 1 was prepared and deposited in a dry process on a molding surface of a mold, which was heated and then cooled to produce a titanium porous body having each thickness and each area shown in Table 1. Used as the titanium powder was HDH powder made of pure titanium having a hydrogen content of less than or equal to 0.5% by mass and having an average circularity of less than or equal to 0.83. Each of the titanium porous bodies produced in Examples 1 to 5 and Comparative Examples 1 to 6 had a titanium purity of more than or equal to 99% by mass, an oxygen content in the range of 0.15% by mass to 0.50% by mass, a nitrogen content in the range of 0.02% by mass to 0.20% by mass, and a carbon content in the range of 0.02% by mass to 0.20% by mass. The contents of other unavoidable impurities were within negligible limits.

Each of Examples 1 to 5 and Comparative Examples 1 to 4 provided an adhesive region where a mold release layer was not formed on the outer edge portion of the molding surface of the carbon mold. This would cause the titanium powder located at the outer edge portion to be sintered while adhering to the adhesive region during heating. The molding surface was square-shaped, and the adhesive region was provided to surround the entire circumference of the easily releasable region with a width in the range of 1 to 5 mm. Boron nitride powder was used for the mold release layer. Comparative Example 5 is the same as Example 1, with the exception that no mold release layer was formed. Comparative Example 6 is the same as Example 1, with the exception that the mold release layer was formed over the entire molding surface.

The heating time during sintering (sintering time) was the time shown in Table 1. The sintering time is the time for bringing the temperature to more than or equal to 950°C as described above. The pressure in the furnace during heating is less than or equal to 1 × 10⁻² Pa. The maximum reaching temperature during heating and the time required for cooling from 950°C to 800°C are shown in the column "Cooling Period" in Table 1. The sintered body was removed after the furnace was cooled to less than or equal to 100°C. In each of Examples 1 to 4 and Comparative Examples 2, 3, 5, and 6, an argon gas was fed and stirred in the furnace during cooling to lower the temperature of the sintered body as gas stirred cooling. In Example 5, an argon gas was fed to the furnace during cooling, but the temperature of the sintered body was lowered with the argon gas enclosed without stirring.

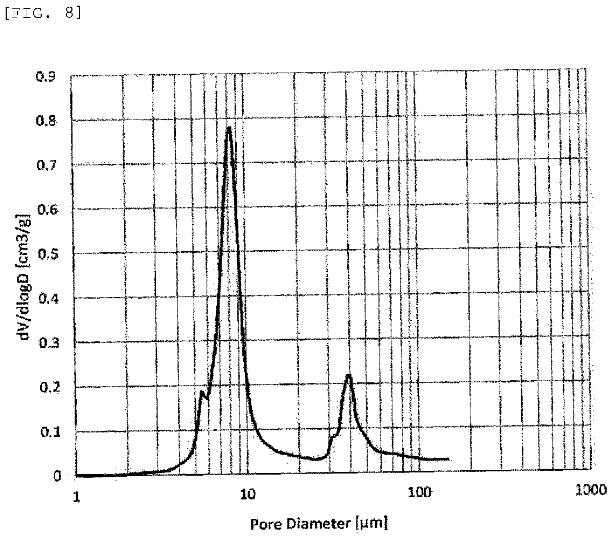

The presence or absence of waviness and the presence or absence of cracks were confirmed for each titanium porous body produced as described above, and the porosity, the pore diameter at the position of the first peak in the pore size distribution, the half width of the first peak, the peak height of the second peak, and the amount of compressive strain were determined in accordance with the methods described above. The results are shown in Table 1. For reference, the pore size distribution of each titanium porous body in Example 1 and Comparative Example 3 are shown in FIGS. 7 and 8.

The variation in air permeability of each titanium porous body was also evaluated. The air permeability was measured with a Gurley densometer manufactured by Toyo Seiki Seisaku-sho, Ltd., in accordance with JIS P 8117, with the exception that the inner diameter of the gasket was 6.0 mm instead of 28.6 mm, and a time t (s/300 ml) required for 300 ml of air to pass therethrough was considered to be the air permeability. When the same sample was used to measure the air permeability six times at different measurement points, the maximum value was determined to be t_{Max} and the minimum value was determined to be t_{Min}, and (t_{Max}) / (t_{Min}) was considered to be the variation in air permeability. As an example, in this test, the case where (t_{Max}) / (t_{Min}) was less than or equal to 1.2 was determined to be acceptable, the case where (t_{Max}) / (t_{Min}) was less than or equal to 1.1 was determined to be good, and the case where (t_{Max}) / (t_{Min}) was 1.0 was determined to be excellent.

The presence or absence of cracks was visually checked. The presence or absence of waviness was determined by placing the titanium porous body on a plane and measuring the maximum height from the position of the plane to the highest point of the surface of the sample in the thickness direction, and if the maximum height was greater than 1.5 mm, the sample was considered to have waviness.

**[Table 1]**

| | Titanium Powdan | | Production Conditions | | | | | Sintered Body | | Titanium Porous Body | | | | | | | | | |
|---|---|---|---|---|---|---|---|---|---|---|---|---|---|---|---|---|---|---|---|
| | | | | | | | | Presence of Absence of Waviness | Presence or Absence of cracks | Thickness (mm) | Area (mm²) | Porosity (%) | Pore Size Distribution | | | Compressive Strain Amount (-) | Air Permeability (6 measurements) | | |
| | D10 (µm) | D90 (µm) | Adhesive Region | Sintering Time (h) | Maximum Reaching Temp. (°C) | Cooling Period (s) | Cooling Method | | | | | | First Peak Position (µm) | First Peak Half Width (µm) | Second Peak Height (%) | | Maximum (s/300ml) | Minimum (s/300ml) | Maximum /Minimum |
| Ex. 1 | 9 | 20 | Outer Edge Only | 2.0 | 1000 | 120 | Ar Stirring | Absent | Absent | 0.30 | 40000 | 40 | 8.0 | 2.1 | 4 | 0.17 | 167 | 151 | 1.1 |
| Ex. 2 | 9 | 20 | Outer Edge Only | 4.0 | 1000 | 120 | Ar Stirring | Absent | Absent | 0.30 | 40000 | 35 | 7.2 | 1.8 | 0 | 0.15 | 201 | 194 | 1.0 |
| Ex. 3 | 9 | 20 | Outer Edge Only | 1.5 | 1000 | 120 | Ar Stirring | Absent | Absent | 0.25 | 40000 | 45 | 8.8 | 2.4 | 5 | 0.18 | 93 | 82 | 1.1 |
| Ex. 4 | 9 | 20 | Outer Edge Only | 2.0 | 950 | 120 | Ar Stirnng | Absent | Absent | 0.30 | 40000 | 45 | 8.8 | 2.5 | 6 | 0.19 | 102 | 89 | 1.1 |
| Ex. 5 | 9 | 20 | Outer Edge Only | 4.0 | 950 | 1125 | Ar Enclosing | Absent | Absent | 0.30 | 40000 | 40 | 7.8 | 1.9 | 4 | 0.19 | 134 | 121 | 1.1 |
| Comp. 1 | 9 | 20 | Outer Edge Only | 2.0 | 1000 | 3600 | Vacuum | Absent | Present | - | - | - | - | - | - | - | - | - | < |
| Comp. 2 | 9 | 20 | Outer Edge Only | 2.0 | 900 | 120 | Ar Stirring | Absent | Absent | 0.30 | 40000 | 55 | 10.2 | 5.1 | 9 | 0.21 | 54 | 39 | 1.4 |
| Comp. 3 | 9 | 35 | Outer Edge Only | 2.0 | 1000 | 120 | Ar Stirring | Absent | Absent | 0.30 | 40000 | 45 | 8.4 | 2.4 | 26 | 0.19 | 93 | 58 | 1.6 |
| Comp. 4 | 9 | 20 | Outer Edge Only | 2.0 | 900 | 3600 | Vacuum | Absent | Absent | 0.30 | 40000 | 55 | 10.5 | 5.4 | 12 | 0.22 | 61 | 47 | 1.3 |
| Comp. 5 | 9 | 20 | Entire Surface | 2.0 | 1000 | 120 | Ar Stirring | Absent | Present | - | - | - | - | - | - | - | - | - | - |
| Comp. 6 | 9 | 20 | Absent | 2.0 | 1000 | 120 | Ar Stirring | Present | Absent | - | - | - | - | - | - | - | - | - | - |

It is found from Table 1 that all of the titanium porous bodies in Examples 1 to 5 have a smaller amount of compressive strain and a suppressed variation in air permeability.

In Comparative Example 1, the cooling rate after heating and sintering was slower, and cracks were generated when the sintered body was peeled off from the molding surface. Therefore, since the titanium porous body in the form of the sheet could not be properly produced in Comparative Example 1, the titanium porous body was not evaluated. In Comparative Example 2, the maximum reaching temperature during heating and sintering was lower, leading to a larger half width of the first peak in the pore size distribution of the titanium porous body, resulting in a variation in air permeability. In Comparative Example 2, the pore diameter at the position of the first peak in the pore size distribution was larger, resulting in a larger amount of compressive strain.

In Comparative Example 3, the 90% particle diameter D90 of the titanium powder was outside the specified range, resulting in a higher peak height of the second peak in the pore size distribution and in a variation in air permeability. In Comparative Example 4, although the cooling rate was slower, no crack of the sintered body was generated because the maximum reaching temperature during heating before that was lower. However, in Comparative Example 4, due to the lower maximum reaching temperature, the amount of compressive strain of the titanium porous body was higher, and the half width of the first peak in the pore size distribution was larger, resulting in a variation in air permeability.

In Comparative Example 5, no mold release layer was formed on the molding surface, so that the sintered body stuck to the molding surface and cracked when it was peeled off. In addition, peeling itself was difficult and some parts shattered. In Comparative Example 6, the mold release layer was formed over the entire molding surface, so that the waviness was generated in the sintered body. Therefore, in each of Comparative Examples 5 and 6, the titanium porous body could not be properly produced as a sheet, so the titanium porous body was not evaluated.

In view of the foregoing, it was found that according to the present invention, it is possible to provide a titanium porous body that is in relatively thin sheet-shaped, has excellent compression resistance, and has pore sizes that are uniform to some extent.

### [Description of Reference Numerals]

1 mold
2 molding surface
3 mold release layer
4 titanium powder
4a sintered body
5 bottom wall
6 side wall
Ar easily releasable region
Aa adhesive region
Tf deposition thickness of titanium powder
Tp thickness of titanium porous body
Ct cutting point

## Claims

1. A titanium porous body in a form of a sheet, wherein:
the titanium porous body has a thickness of 0.3 mm or less and a compressive strain amount of 0.20 or less upon pressurization at 80 MPa; and
a half width of a first peak that is the highest peak height in a pore size distribution showing a relationship between a diameter and a volume of pores is less than or equal to 3.5 um, and a peak height of a second peak that is the second highest peak height after the first peak is less than or equal to 10% of the peak height of the first peak.

2. The titanium porous body according to claim 1, wherein the titanium porous body has a pore diameter of less than or equal to 10.0 um at a position where the first peak appears in the pore size distribution.

3. The titanium porous body according to claim 1 or 2, wherein the titanium porous body has a porosity of less than or equal to 45%.

4. The titanium porous body according to any one of claims 1 to 3, wherein the titanium porous body has an area of more than or equal to 10000 mm².

5. The titanium porous body according to any one of claims 1 to 4, wherein the titanium porous body has a Ti content of more than or equal to 98% by mass.

6. The titanium porous body according to any one of claims 1 to 5, wherein the peak height of the second peak is less than or equal to 5% of the peak height of the first peak.

7. A method for producing a titanium porous body in a form of a sheet by heating and sintering titanium powder on a molding surface of a mold, the method comprising:
a powder preparation step of preparing titanium powder having a 10% particle diameter D10 of 5 um or more and 15 um or less and a 90% particle diameter D90 of 15 um or more and 25 um or less;
a mold release layer formation step of forming no mold release layer on an adhesive region of an outer edge portion of the molding surface but forming the mold release layer on an easily releasable region other than the adhesive region;
after the mold release layer formation step, a powder deposition step of depositing the titanium powder on the molding surface in a dry process;
after the powder deposition step, a heating step of heating the titanium powder to a maximum reaching temperature of more than or equal to 950°C and sintering the titanium powder to obtain a sintered body; and
after the heating step, a cooling step of cooling the sintered body on the molding surface, wherein a time required for cooling from at least 950°C to 800°C is less than or equal to 1500 seconds; and
wherein the method produces a titanium porous body having a thickness of less than or equal to 0.3 mm.

8. The method for producing a titanium porous body according to claim 7, wherein the method produces the titanium porous body having an area of more than or equal to 10000 mm².

9. The method for producing a titanium porous body according to claim 7 or 8, wherein the titanium powder prepared in the powder preparation step has an average circularity of less than or equal to 0.83.

10. The method for producing a titanium porous body according to any one of claims 7 to 9, wherein a material of the mold having the molding surface comprises at least one selected from the group consisting of carbon, quartz, graphite, magnesia (MgO), calcia (CaO), zirconia (ZrO₂) and yttria (Y₂O₃).

11. The method for producing a titanium porous body according to any one of claims 7 to 10, wherein a time for bringing the titanium powder to more than or equal to 950°C in the heating step be from 30 to 480 minutes.
